(19) Europäisches Patentamt
European Patent Office
Office européen des brevets

(11) **EP 3 461 584 B1**

(12) **FASCICULE DE BREVET EUROPEEN**

(45) Date de publication et mention
de la délivrance du brevet:
**03.06.2020 Bulletin 2020/23**

(51) Int Cl.:
**B23P 15/00** *(2006.01)*     **B23P 11/02** *(2006.01)*
**F01D 5/06** *(2006.01)*     **F04D 29/64** *(2006.01)*
**F04D 29/32** *(2006.01)*

(21) Numéro de dépôt: **18197072.4**

(22) Date de dépôt: **27.09.2018**

(54) **PROCÉDÉ DE RÉALISATION D'UN ROTOR DE COMPRESSEUR HAUTE PRESSION DE TURBOMACHINE**

HERSTELLUNGSVERFAHREN EINES ROTORS EINES
TURBOTRIEBWERK-HOCHDRUCKKOMPRESSORS

METHOD FOR PRODUCING A HIGH-PRESSURE COMPRESSOR ROTOR OF A TURBINE ENGINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.09.2017 FR 1759147**

(43) Date de publication de la demande:
**03.04.2019 Bulletin 2019/14**

(73) Titulaire: **SAFRAN AIRCRAFT ENGINES
75015 Paris (FR)**

(72) Inventeurs:
• **HACHARD, Arnaud
77550 MOISSY-CRAMAYEL (FR)**

• **MARCHAND, Jérémy
77550 MOISSY-CRAMAYEL (FR)**

(74) Mandataire: **Ernest Gutmann - Yves Plasseraud
S.A.S.
66, rue de la Chaussée d'Antin
75009 Paris (FR)**

(56) Documents cités:
**EP-A1- 3 170 988     EP-A2- 1 591 623
GB-A- 770 120     JP-A- 2008 223 541
US-A- 4 635 336**

Printed by Jouve, 75001 PARIS (FR)

**Description**

La présente invention concerne un procédé de réalisation d'un rotor de compresseur de turbomachine à gaz pour aéronef à au moins deux disques de rotor selon le préambule de la revendication 1. Un tel procédé est décrit dans EP 1 591 623 A2 pour deux tambours.

Un tel rotor, qui présente un axe de rotation (X1 ci-après), est du type comprenant, comme pièces posées axialement (axe X1) en pile :

- un disque d'étanchéité, pour l'étanchéité entre ledit rotor du compresseur et une chambre de combustion, le disque d'étanchéité présentant des brides de fixation,
- au moins un premier disque de rotor (tambour 27, ou disque 270 ci-après), à assembler au disque d'étanchéité par les brides de fixation,
- un disque intermédiaire comportant un étage intermédiaire d'aubes,
- au moins un second disque de rotor (tambour 31, ou disque 310 ci-après) définissant, avec ledit au moins un premier disque de rotor et le disque intermédiaire, des étages d'aubes du rotor,
- une partie amont d'un arbre haute pression de liaison entre ledit rotor du compresseur et une turbine, et
- un disque primaire définissant le premier des étages d'aubes du rotor.

Ce qui précède s'appliquera, avantageusement et en particulier, dans le cas suivant, avec au moins les deux premières caractéristiques qui suivent, liées à un assemblage de pièces délicat à assembler, sur un compresseur complexe :

- ledit au moins un premier disque de rotor se présente comme une succession de disques de rotor consécutifs définissant un premier tambour du rotor,
- ledit au moins un second disque de rotor se présente comme une succession de disques de rotor consécutifs définissant un second tambour du rotor,
- le compresseur est un compresseur haute pression, ladite partie amont d'arbre étant alors celle d'un arbre haute pression,
- le disque d'étanchéité et le disque intermédiaire présentent chacun un diamètre extérieur au moins trois fois plus grand que leur épaisseur maximum,
- les tambours du rotor et le disque primaire sont monoblocs, chacun. Le disque primaire est un disque aubagé monobloc.

Lors de la constitution de la pile des pièces, une condition essentielle est d'atteindre un défaut de ligne d'arbre minimum. Ainsi, on cherche à ce que la coaxialité des différentes pièces précitées entre elles soit la plus parfaite possible. On cherche à limiter le plus possible les défauts de concentricité entre les pièces et de planéité de ces pièces, en particulier là où elles sont en appui les unes contre les autres. On cherche à ce que l'équilibre du rotor soit optimum et aussi à faciliter et sécuriser les opérations de pose des pièces.

Lors de la pose desdites pièces, on les empile les unes sur les autres puis on les assemble deux à deux.

Or, actuellement, il est trop fréquent que, pour des problèmes de pose hors tolérance, il faille démonter, puis remonter le rotor, ce qui induit une perte de temps considérable sur les temps de cycles. En outre pour les pièces de turbomachines ayant déjà volées, il est possible que les centres de maintenance ne disposent pas (plus) des éléments dimensionnels originaux, alors qu'il y a pu par exemple y avoir eu une dérogation pour valider un écart aux spécifications. Ces écarts non connus induisent des difficultés dans le remontage.

Une solution proposée par la présente invention à une partie au moins des problèmes précités est que les opérations suivantes soient réalisées de la façon indiquée ci-après, aux moments précisés ci-après:

- lors de la pose du disque d'étanchéité sur ledit au moins un premier disque de rotor et/ou du disque intermédiaire sur cedit au moins un premier disque de rotor assemblé avec le disque d'étanchéité, on applique un tassement axial (X1) avec une pression comprise entre 40 x10$^5$ et 60 x10$^5$ Pa,
- avant assemblage du disque d'étanchéité avec ledit au moins un premier disque de rotor, on chauffe le disque d'étanchéité entre 80°C et 140°C,
- lors de la pose du disque intermédiaire sur ledit au moins un premier disque de rotor assemblé avec le disque d'étanchéité, on chauffe le disque intermédiaire entre 120°C et 160°C, puis on applique un tassement axial avec une pression comprise entre 40 x10$^5$ et 60 x10$^5$ Pa,
- lors de la pose dudit au moins un second disque de rotor sur le disque intermédiaire assemblé avec ledit au moins un premier disque de rotor, lui-même assemblé avec le disque d'étanchéité :

-- a) on applique un tassement axial (X1) avec une pression comprise entre 40 x10$^5$ et 60 x10$^5$ Pa,
-- b) on refroidit ledit au moins un second disque de rotor :

--- b1) entre -70°C et -110°C, ou
--- b2) en fonction de diamètres extérieurs maximum du disque intermédiaire et dudit au moins un second disque de rotor,

-- c) on ne chauffe pas de nouveau le disque intermédiaire, sauf si lors de l'étape b), la température de refroidissement dudit au moins un second disque de rotor a été inférieure à -130°C, à 10°C près.

Ne pas chauffer a pour sens laisser la pièce, ici le disque intermédiaire, à la température où il/elle se trouve (en l'espèce à l'issue de l'étape b1) ou b2)), sans donc le/la chauffer de nouveau.

Ainsi, on va limiter le risque de décollement du disque intermédiaire. A noter qu'un refroidissement à -133°C/-137°C dudit au moins un second disque de rotor induit déjà un risque d'excentration lors du serrage et un risque de déformation lors du tassement. Si on est hors tolérance en température, il y a donc risque de devoir déposer ledit au moins un second disque de rotor avec alors le risque d'un décollement du disque intermédiaire. En outre, lesdits au moins un second disque de rotor et disque intermédiaire présentant des diamètres extérieurs différents, ceci peut influer sur le serrage (assemblage). Les précautions ci-avant proposées limitent les risques.

Un problème spécifique ayant été noté sur ledit au moins un second disque de rotor, compte tenu de sa position dans l'empilement, il est par ailleurs proposé que, lors de l'étape b2), on refroidisse cedit au moins un second disque de rotor, en fonction des diamètres extérieurs maximum du disque intermédiaire et dudit au moins un second disque de rotor, selon alors la formule :

$$T = [- (\emptyset D3 - \emptyset D2 + jeu) / (\alpha * \emptyset D3) + Tambiante],$$

avec :

T = Température de refroidissement en °C,
$\emptyset$D3 = diamètre extérieur maximum dudit au moins un second disque de rotor (en mm),
$\emptyset$D2 = diamètre extérieur maximum du disque intermédiaire (en mm),
jeu = constante (en m) prédéfinie comprise entre 0,10mm et 0,30mm,
$\alpha$ = coefficient de dilatation du matériau dudit au moins un second disque de rotor [°C$^{-1}$],
Tambiante = Température de l'environnement de travail en °C.

Par ailleurs, on va éviter de sur ou sous-déformer les pièces lors de leur pose. On va éviter de cumuler excessivement des défauts de pose, pièces après pièces, sur un même rotor.

Un problème corolaire qui s'est fait jour concerne la manière de gérer le problème de défaut de ligne d'arbre en utilisant les moyens de mesure et de contrôle déjà existants.

Sur un rotor haute pression, la face avant (ou amont, tournée vers la soufflante dont est équipée la turbomachine représentée), correspondant à celle de ladite partie amont de l'arbre haute pression, est prévue pour être engagée à travers le compresseur basse pression de la turbomachine, l'arbre étant traversé par un arbre basse pression reliant ensemble les compresseur et turbine basse pression. La face arrière du rotor est, via le disque d'étanchéité, fixée avec la chambre de combustion de la turbomachine.

Un but général de la pose assemblée étant d'empiler les pièces du rotor avec un minimum de défaut de ligne d'arbre, ce défaut peut être mesuré à l'aide d'un système dénommé « GENSPECT ». Le défaut de la ligne d'arbre est calculé en combinant, typiquement en cumulant, les valeurs de planéité et de concentricité des faces extrêmes, supérieure et inférieure, du rotor assemblé. Ce défaut est fourni en millimètre avec une tolérance maximale prédéterminée à ne pas dépasser ; sinon la pose des pièces est à refaire.

Afin de limiter la fréquence d'une telle situation et répondre de nouveau à une partie au moins des problèmes précités, il est proposé qu'avant empilement de l'ensemble des pièces, soient aussi prévues des étapes dans lesquelles, en tant que pièces du rotor, le disque d'étanchéité, lesdits au moins un premier et un second disques de rotor et le disque intermédiaire soient caractérisées :

-- par des mesures en concentricité et planéité, de façon à définir de possibles défauts :

--- de planéité et/ou de concentricité, en extrémité de rotor, et/ou
--- de ligne d'arbre, le défaut de ligne d'arbre étant défini en combinant les valeurs de planéité et de concentricité desdites pièces posées assemblées,

-- par une détermination de l'angle, autour dudit axe de rotation (X1), où se situe un dit défaut de planéité et/ou de concentricité,

-- et par une prise en compte des tolérances admissibles desdites mesures,

de sorte qu'on déduise de ces mesures et des tolérances admissibles, des angles de pose desdites pièce les unes par rapport les autres, autour dudit axe de rotation, afin que l'empilement soit réalisé dans la tolérance de la ligne d'arbre,

- et qu'on empile ensuite les pièces, en respectant lesdits angles de pose.

Si les pièces suivantes sont concernées, ce qui précède s'appliquera comme suit :

- le disque aubagé, monobloc ou pas, ne sera pas concerné,
- ladite partie amont d'arbre assurant alors la liaison entre un rotor de compresseur haute pression et une turbine également haute pression sera aussi caractérisée comme ci-avant.

Cela étant, des erreurs de mesures peuvent être induites par l'état dans lequel se trouvent le rotor, en particulier s'il est issu d'une turbomachine ayant déjà volée. En outre, il s'est avéré que ces erreurs de mesures pouvaient être liées à des problèmes de répétabilité et de reproductibilité : Il a été observé que lorsqu'on dépasse une certaine tolérance, la variabilité de la mesure est plus importante. Ces erreurs ont un impact sur la qualité de l'ensemble du montage.
Afin de limiter ces inconvénients et ajuster la tolérance en fonction de l'étude préalable du moyen de mesure, il est proposé que les caractérisations précitées desdites pièces avec définition des tolérances admissibles, comprennent des sous-étapes où :

- on nettoie une surface à mesurer avec un dégraissant, et
- on effectue les mesures en concentricité et planéité, ainsi que la détermination dudit angle où se situe un dit défaut de concentricité de planéité, ceci :

-- après avoir préalablement réalisé et entré en mémoire d'un ordinateur, par l'intermédiaire duquel les mesures sont effectuées, plusieurs mesures au moins de concentricité, de planéité et dudit angle où se situe un dit défaut, ces mesures étant conduites sur d'autres rotors de compresseur du même type (haute pression si tel est le cas),
-- et en avoir déduit les tolérances admissibles à prendre en compte.

Concernant le disque d'étanchéité, il s'est avéré qu'un risque spécifique de déformation excessive existait en liaison avec sa pose, du fait de la faible épaisseur ; par exemple, il peut s'agir d'une pièce d'environ 35cm à 45cm de diamètre extérieur (maximum) et de 7cm à 12cm d'épaisseur (axialement). il s'est avéré que ce disque d'étanchéité pouvait ne pas être assez dilaté si on le chauffait insuffisamment lors de sa pose, sachant que l'effet inverse (un disque d'étanchéité trop dilaté) peut survenir avec une température de chauffe trop importante. A noter aussi de possibles effets « parapluie » qui surviennent parfois.
Un effet « parapluie » est une déformation non homogène de la pièce due à la chauffe localisée, la déformée maximale se trouve au niveau de la couronne extérieure du disque.
Aussi est-il également proposé que le procédé précité soit tel que l'étape de chauffage du disque d'étanchéité entre 100°C et 140°C comprenne :

- un chauffage au moins des brides de fixation dudit disque d'étanchéité entre 100°C et 120°C, ou
- un chauffage de plusieurs endroits dudit disque d'étanchéité, ou
- un chauffage dudit disque d'étanchéité par l'intermédiaire d'un four.

Ces solutions limitent tout ou partie des problèmes précités.
Et cela sera d'autant plus vérifié si, pour des problèmes comparables à ceux mentionnés sur des disques d'étanchéité que des retours d'expériences ont fait constater aussi sur des disques intermédiaires, il est, lors de la pose d'un disque intermédiaire sur ledit au moins un premier disque de rotor assemblé avec le disque d'étanchéité, procédé à un chauffage du disque intermédiaire, ceci dans un four et/ou en plusieurs endroits du disque intermédiaire situés à l'écart des brides de fixation de ce disque intermédiaire.
Une démarche d'optimisation des conditions de pose a en outre été conduite, en vue d'une maîtrise des tolérances. Est visé un calcul des angles de pose de chaque pièce les unes sur les autres afin de maintenir si possible le montage dans la tolérance de la ligne d'arbre, tout en évitant l'effet vilebrequin (ligne d'arbre en forme de vilebrequin, avec possible création d'un balourd). Un logiciel pourra définir/calculer ces angles à partir des données de défaut de planéité et de concentricité des pièces. Obtenir également l'angle et la valeur du défaut après la pose de chaque pièce, jusqu'à la valeur finale sur le rotor entier est aussi visé. Les pièces seront ensuite empilées les unes sur les autres en suivant les angles fournis par les calculs.

Dans ce cadre, il est plus précisément proposé qu'à partir :

- des caractérisations précitées desdites pièces du rotor du compresseur concerné, des déterminations des angles où se situent lesdits défauts de planéité et/ou de concentricité,
- et de la prise en compte des tolérances admissibles desdites mesures, soient prédits, avant empilement desdites pièces, l'angle de pose de chaque pièce et les valeurs desdits défauts après la pose de chaque pièce.

En liaison avec ce qui précède, on évitera ainsi notamment, pour obtenir une ligne d'arbre dans la tolérance, de tomber dans l'erreur d'opposer les défauts de planéité et/ou de concentricité de chaque pièce en cherchant ainsi à annuler ces défauts entre eux. En effet, cette méthode peut engendrer une ligne d'arbre en forme de vilebrequin, comme précité.

Avec le retour d'expériences, ceci sera même d'autant plus évité avec les caractéristiques qui suivent, dès lors qu'il s'est par ailleurs avéré, concernant encore le disque d'étanchéité, qu'un risque de défaut de respect de tolérance pouvait continuer à exister.

Aussi est-il subsidiairement proposé que, ledit disque d'étanchéité étant déjà posé contre ledit au moins un premier disque de rotor,

- si, concernant certaines au moins desdites pièces restant à poser, les valeurs entre les angles de pose déduits des mesures et des tolérances admissibles, et les angles de pose prédits présentent une différence supérieure ou égale à au moins 30° pour la pose du disque d'étanchéité,
- et si la différence entre les valeurs mesurées desdits défauts et celles prédites est inférieure ou égale à une valeur comprise entre 0,01 et 0,05mm, alors une étape de prédiction est refaite, sans dépose du disque d'étanchéité, des mesures d'angle de pose de chaque pièce restante et les valeurs desdits défauts après la pose de chaque pièce restante étant alors réalisées avec lesdites pièces restantes, dont un sous-ensemble formé par le disque d'étanchéité posé avec ledit au moins un premier disque de rotor,
- si par contre la différence entre les valeurs mesurées desdits défauts et celles prédites est supérieure ou égale à une valeur comprise entre 0,01mm et 0,05mm, les pièces déjà empilées sont déposées et l'empilement est recommencé.

Concernant la pose de ladite partie amont de l'arbre en cause, il s'est avéré qu'un risque spécifique d'écart dans la chaîne de cotes pouvait exister suite à une procédure connue de relevé de cote avant pose, sur cette dite partie amont de l'arbre en cause.

Une solution proposée qui a apporté un effet bénéfique sur la fiabilité de la pose et la limitation des rebuts consiste :

- lors de la pose de ladite partie amont de l'arbre en cause, à chauffer cette partie entre 120°C et 140°C,
- et, après un assemblage serré entre ladite partie amont de l'arbre en cause et l'empilement assemblé déjà réalisé, à réaliser un relevé de cote sur une extrémité supérieure de ladite partie amont de l'arbre, l'ensemble étant supposé en position verticale.

Concernant maintenant la pose du disque primaire, il y a un risque d'endommager la pièce durant les manipulations, surtout en cas de dépose suite à un montage hors tolérance.

Aussi est-il proposé:

- qu'avant la pose du disque primaire, qui s'effectue axialement autour de ladite partie amont de l'arbre de liaison en cause, on contrôle que les poses déjà réalisées desdites pièces empilées l'ont été dans la tolérance de la ligne d'arbre,
- et que, lors de ladite pose du disque à aubes monobloc, on chauffe le disque primaire entre 80°C, ou 100°C, et 140°C.

L'invention pourrait être comprise avec davantage de détails, caractéristiques et avantages à la lecture de la description suivante faite à titre d'exemple non limitatif en référence aux dessins annexés où :

- la figure 1 montre, en coupe axiale, une vue générale d'un turboréacteur à double flux et double corps sur lequel l'invention est susceptible de s'appliquer ;

**EP 3 461 584 B1**

- la figure 2 est une coupe schématique axiale d'un possible rotor conforme à celui évoqué dans l'invention ;
- la figure 3 montre des étapes successives de pose (les pointillés du repère 33 indique qu'il s'agit là d'une option) ;
- les figures 4 et 6 schématisent un disque d'étanchéité et un disque intermédiaire, respectivement ;
- la figure 5 schématise un four;
- la figure 7 schématise la structure d'un système GENSPECT;
- la figure 8 schématise en éclaté un empilement desdites pièces du rotor, en cours de pose;
- la figure 9 schématise une pièce de l'empilement marquée de repères de pose ;
- la figure 10 schématise des résultats de mesures par palpeurs de défauts;

DESCRIPTION DETAILLEE

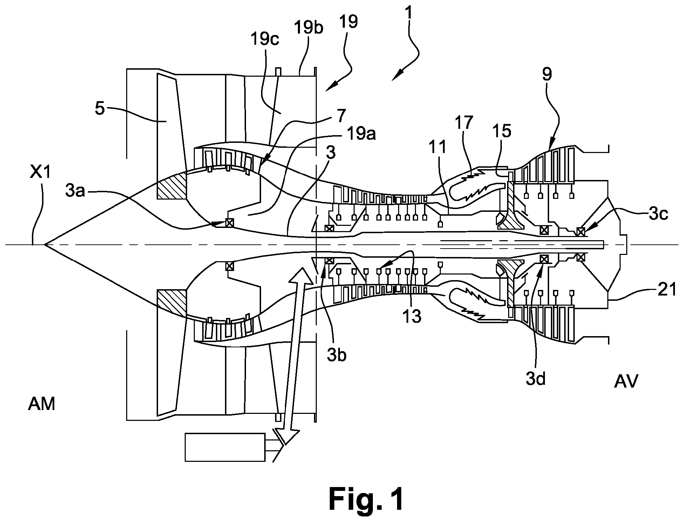

Sur la figure 1, la turbomachine 1 pour aéronef illustrée comprend un premier arbre 3 (dit arbre basse pression, BP) reliant un rotor de soufflante 5 et les premiers étages 7 de compresseur (formant le compresseur basse pression) à la turbine basse pression 9 ; l'ensemble forme le corps basse pression, BP. Coaxial au premier arbre suivant l'axe X1 de rotation général de la turbomachine, un deuxième arbre 11 (dit arbre haute pression, HP) relie les étages 13 haute pression du compresseur (formant le compresseur haute pression) à la turbine 15 haute pression ; l'ensemble forme le corps haute pression HP avec la chambre de combustion 17. L'arbre BP 3 est supporté, en amont (AM), par le palier 3a monté sur le carter 19 dit intermédiaire et, en aval (AV), par le palier 3c monté sur le carter d'échappement 21. L'arbre 11, dit arbre haute pression (HP) est supporté ici par le palier 3b du carter intermédiaire 19 et à l'arrière par l'arbre haute pression 3 par l'intermédiaire du palier interarbre 3d.

Le carter intermédiaire comprend une virole 19b, radialement extérieure, pourvue de moyens d'attache avant à l'aéronef et supportant le carter de soufflante, ainsi que de bras radiaux 19c reliant le moyeu 19a à la virole 19b.

En fonctionnement, un tel moteur aspire l'air par la soufflante qui le comprime en un flux primaire qui traverse les étages de compression, la chambre de combustion et les étages de turbine et un flux secondaire qui est éjecté dans l'atmosphère en bipassant la chambre de combustion. Les turbines entraînent les moyens de compression par l'intermédiaire des arbres BP 3 et HP 11, respectivement.

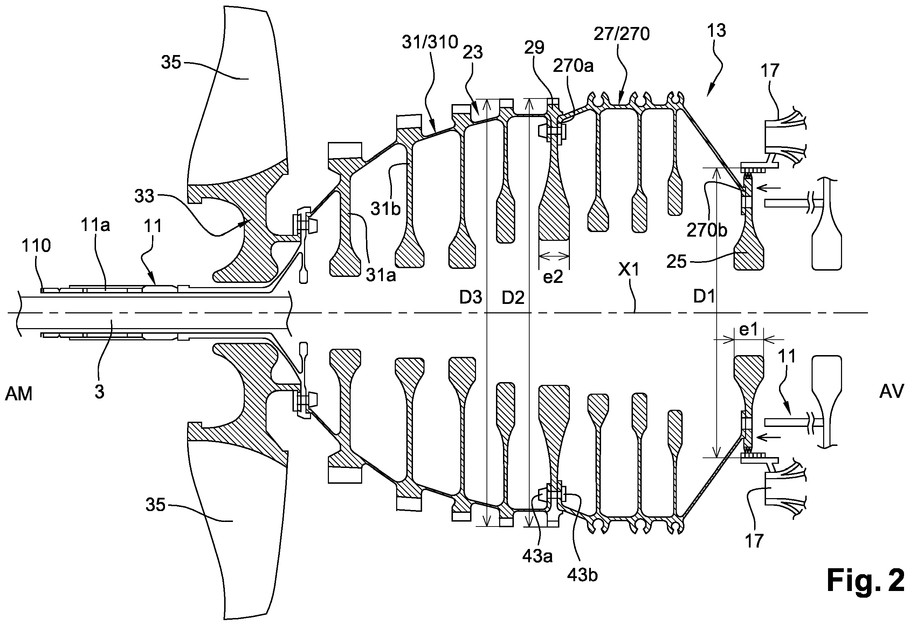

Sur la figure 2, on voit donc schématiquement représenté un exemple de rotor 23 appartenant au compresseur haute pression 13.

Le rotor 23, d'axe de rotation X1, comprend, comme pièces axialement empilées les unes à la suite des autres, de l'aval vers l'amont :

- un disque 25 d'étanchéité entre ce rotor 23 et la chambre de combustion 17, ledit disque 25 étant fixé à un premier tambour 27 du rotor par des brides de fixation,
- une première succession de disques de rotor consécutifs, qui peuvent être en une seule pièce, définissant le premier tambour 27 du rotor,
- un disque intermédiaire 29 comportant un étage d'aubes intermédiaire, interposé entre le premier tambour 27 du rotor et un second tambour 31 du rotor, le disque d'étanchéité 25 et le disque intermédiaire 29 présentant chacun un diamètre extérieur (voir respectivement diamètres D1 et D2) au moins trois fois plus grand que leur épaisseur maximum (respectivement e1 et e2),
- une seconde succession de disques de rotor consécutifs en une seule pièce définissant ledit second tambour 31 du rotor,
- une partie amont 11a de l'arbre haute pression 11 que délimite une extrémité distale 110, et
- un disque 33 aubagé - aubes 35 - qui peut être monobloc, définissant le premier des étages d'aubes du rotor 23, les premier et second tambours 27,31 comprenant chacun plusieurs étages d'aubes (tels les étages 31a, 31b du second tambour 31).

En alternative, la partie amont 11a de l'arbre HP 11 peut comprendre une configuration dans laquelle un disque est lié solidairement à la partie amont 11a, sans que le disque 33 soit (à aubes) monobloc.

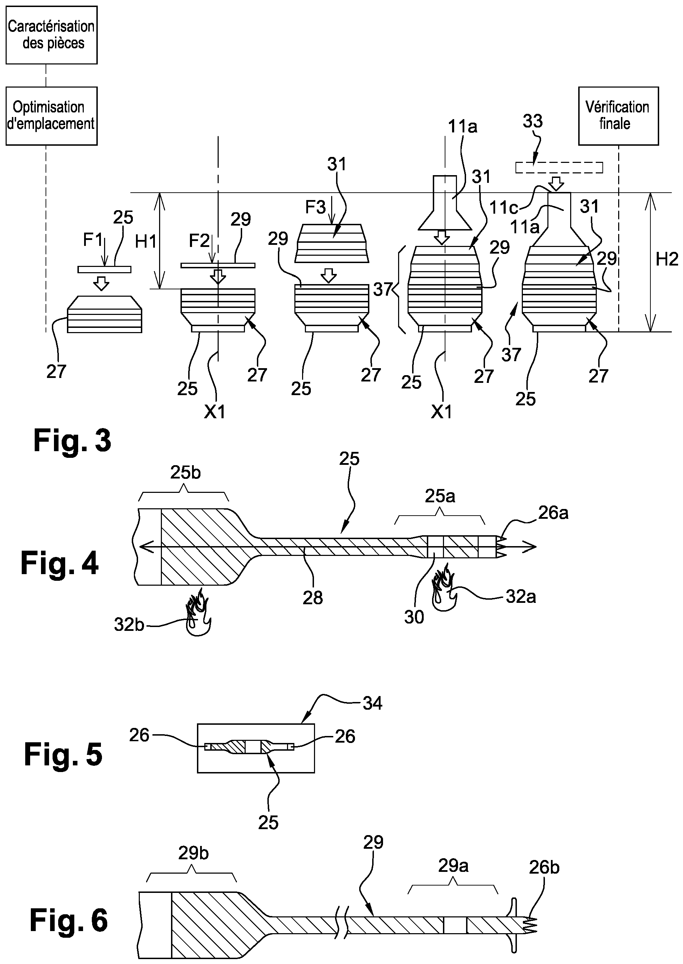

C'est donc sur la pose de ces pièces qu'il a ici été travaillé, les pièces étant successivement empilées axialement les unes sur les autres suivant l'axe X1 alors vertical, dans l'ordre ci-dessus, comme schématisé figure 3 (voir étapes successives de gauche à droite et flèches indiquant chaque étape d'empilement), puis assemblées (axialement serrées) deux à deux.

A cet égard, les propositions de l'invention sont les suivantes:

- a) comme schématisé tout à gauche figure 3, lors de la pose (donc avant serrage axial entre elles des deux pièces ou groupe de pièces respectivement concernées) du disque d'étanchéité 25 sur le premier tambour 27 du rotor et/ou du disque intermédiaire 29 sur le premier tambour 27 du rotor assemblé, serré, avec le disque d'étanchéité 25, il est déjà notamment proposé d'appliquer un tassement axial des pièces avec une pression F1 comprise entre

6

40 et 60 x10⁵ Pa. Pour appliquer une pression F1 uniforme sur toute la pièce 25, on peut placer sur elle un plateau plaqué à l'aide de vérins hydrauliques. Ce plateau est retiré après retour à température ambiante (20-25°C) ; lire ci-après ;

- b) avant assemblage de ce disque d'étanchéité 25 avec le premier tambour 27, par serrage à l'endroit de brides 25a (figures 4,6) proches de l'extrémité radialement extérieure du disque où se situent les léchettes d'étanchéité 26a, il est notamment proposé, comme schématisé figures 4,5, d'appliquer de chauffer le disque d'étanchéité 25 entre 80°C et 140°C, typiquement entre 105 et 115°C. A ce sujet, il est en particulier proposé de prévoir :

-- un chauffage entre 100°C et 120°C au moins des brides 25a de fixation (autour des zones où se situe les trous 30 de serrage par vis des pièces 25-27), ou
-- un chauffage dudit disque d'étanchéité par l'intermédiaire d'un four 34 (figure 5), ou
- un chauffage (repères 32a, 32b figure 4) de plusieurs endroits dudit disque d'étanchéité 25 ; il peut s'agir des zones 25a et 25b (zone de pied, radialement intérieure du disque où il s'évase). La double flèche 28 schématise le maintien essentiellement plan du disque 25, du fait du chauffage multizones ;

- c) lors de la pose, comme schématisé figure 3, du disque intermédiaire 29 sur le premier tambour 27 qui, lui, est donc déjà assemblé, serré, avec le disque d'étanchéité 25, il est par ailleurs proposé de chauffer le disque intermédiaire 29 entre 120°C et 160°C, typiquement entre 130 et 150°C, puis d'appliquer un tassement axial avec une pression comprise entre 40 et 60 x10⁵ Pa (cf. pression axiale F2 figure 3). Comme ci-avant, il est aussi proposé qu'alors le chauffage du disque intermédiaire 29 soit réalisé, avec le même effet attendu, dans un four (celui 34 par exemple) et/ou en plusieurs endroits du disque intermédiaire situés à l'écart des brides 29a de fixation du disque intermédiaire : zone de pied 29b typiquement, le disque intermédiaire 29 étant lui aussi pourvu de léchettes d'étanchéité 26b, en extrémité radialement extérieure (cf. figure 6) ;

- d) lors de la pose du second tambour 31 du rotor sur le disque intermédiaire 29 alors déjà assemblé (donc serré) avec le premier tambour 27, lui-même assemblé avec le disque d'étanchéité 25, il est encore proposé :

-- a) d'appliquer un tassement axial F3 (figure 3) avec une pression alors comprise entre 40 et 60 x10⁵ Pa,
-- d'effectuer une étape b1) ou b2) comme ci-après, et
-- c) de ne pas chauffer de nouveau le disque intermédiaire 29, sauf si lors de l'étape b2), la température de refroidissement du second tambour 31 a été inférieure à -130°C, à 10°C près.

Concernant ces étapes b1) ou b2), préalables à (dans le sens « préparatoires à », ou « faites juste avant ») l'engagement du second tambour 31 du rotor avec le disque intermédiaire 29, elles prévoient :

-- b1) de refroidir le second tambour 31 entre -70°C et -110°C, typiquement entre -80°C et -100°C, ou
-- b2) de refroidir le second tambour 31 en fonction des diamètres extérieurs maximum du disque intermédiaire 29 et du second tambour 31 (voir diamètres respectifs D2, D3 figure 2), selon alors la formule :

$$T = [- (\varnothing D3 - \varnothing D2 + jeu) / (\alpha * \varnothing D3) + Tambiante],$$

avec

T = Température de refroidissement en °C
$\varnothing$D3 = diamètre extérieur maximum (cf. diamètre D3) du second tambour 31, en mm,
$\varnothing$D2 = diamètre extérieur maximum du disque intermédiaire 29 (cf. diamètre D2), en mm,
jeu = constante prédéfinie comprise entre 0,10mm et 0,30mm,
$\alpha$ = coefficient de dilatation du matériau du second tambour 31, en °C⁻¹
Tambiante = Température de l'environnement de travail en °C.

Typiquement, les pressions axiale F1, F2, F3 seront comprises entre 45 et 55 x10⁵ Pa.
De préférence, avec un second tambour 31 en titane à coefficient de dilatation entre 9,5 et 10x10E-6, la température de refroidissement du second tambour ne nécessitant pas de chauffer de nouveau le disque intermédiaire 29 ne sera pas inférieure à -130°C, à 10°C près, pour une planéité maximisée.
Afin, comme déjà mentionné, d'apporter un effet bénéfique sur la fiabilité de la pose et la limitation des rebuts, en limitant les cumuls de défauts alors que la ligne de cotes s'allonge, il est proposé :

- que, lors de la pose précitée de la partie amont 11a de l'arbre haute pression 11 (de préférence avant de présenter la pièce), cette partie amont 11a soit chauffée entre 120°C et 140°C et,

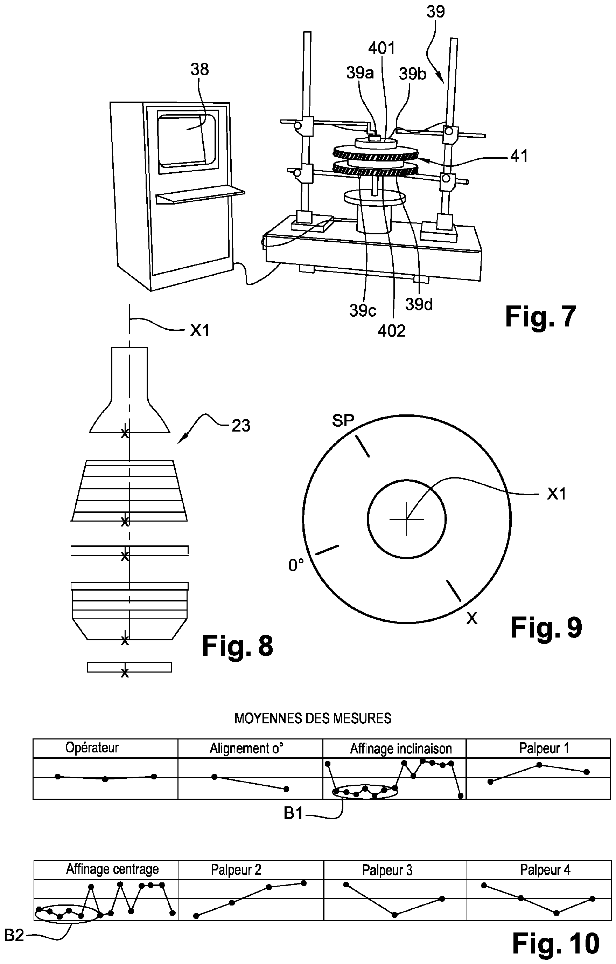

- après un assemblage entre cette partie amont d'arbre 11a et l'empilement assemblé déjà réalisé (figure 3 ; ensemble 37 axial serré), on réalise un relevé de cotes, par palpeurs 39a,39b. (figure 7), sur une extrémité libre, ici supérieure 110 de cette partie amont 11a, l'ensemble 37 étant alors encore disposé verticalement.

Il est à noter que prises en commun, comme cela est conseillé, les spécificités ci-avant permettent non seulement de surmonter un problème localisé à l'endroit de la ou du sous-groupe de pièces citée(s), mais aussi de surmonter la difficulté qu'il y a eu à réfléchir à l'ensemble des étapes de montage, chacune pouvant en effet impacter l'ensemble du montage.

Cela dit, un autre aspect a aussi été considéré, lié à la qualité des mesures visant à permettre de s'assurer qu'à chaque étape de pose la tolérance de montage est respectée et qu'il n'y a pas une dérive aboutissant à un montage complet hors tolérance.

A cet égard, a en particulier été notée l'importance:

- d'ajuster la tolérance en fonction d'une étude préalable du moyen de mesure qui comprend des palpeurs 39a à 39d (figure 7), à commande de positionnement et de relevés automatisée, et
- de prendre en compte de façon anticipée les répétabilité et reproductibilité de fonctionnement dudit moyen de mesure.

C'est ainsi qu'il a été proposé de caractériser les pièces du rotor : de préférence, toutes sauf le disque 33 à aubes monobloc (appelé aussi « blisk » pour « bladed disk »), sont mesurées en concentricité et planéité. Une mesure par palpage de la pièce permet de fournir le défaut de planéité et concentricité

La caractérisation fournira aussi favorablement l'angle (autour de l'axe X1) où se situe le défaut.

A cette fin, il est de façon pratique prévu, avant empilement de l'ensemble des pièces 25,27,29,31,33,11a, et sauf pour ce qui concerne le disque 33, de caractériser ces pièces du rotor 23 :

- par des mesures en concentricité et planéité, de façon à définir de possibles défauts :

  -- de planéité et/ou de concentricité, en extrémité 110 de rotor, et/ou
  -- de ligne d'arbre (axe X1), le défaut de ligne d'arbre étant défini en cumulant les valeurs de planéité et de concentricité desdites pièces posées assemblées,
  -- par une détermination de l'angle (A ci-après), autour dudit axe de rotation X1, où se situe un dit défaut de planéité et/ou de concentricité,
  -- et par une prise en compte des tolérances admissibles desdites mesures.

De fait, en utilisant le système GENSPECT on va pouvoir disposer typiquement de quatre palpeurs 39a-39d et d'un plateau rotatif équipé d'un mandrin pour poser la pièce (figure 7). L'opérateur place les palpeurs sur les surfaces à mesurer puis fait tourner le plateau pour lancer la lecture. Les palpeurs sont reliés à l'ordinateur 38 dans lequel le logiciel dédié calcule le défaut de planéité et de concentricité de la pièce, ce qui fournit la valeur du défaut maximum de la pièce et l'angle A où se trouve ce défaut. Le logiciel calcule le défaut considéré en combinant le défaut de concentricité et le défaut planéité (ici mesurés, c'est-à-dire en les additionnant), le défaut de planéité étant, lui, pondéré (en l'espèce multiplié) avec la hauteur restante jusqu'à l'extrémité du rotor (voir hauteur H1 pour ce qui concerne la pose à venir du disque intermédiaire 29, figure 3). Ce calcul permet de projeter le défaut de la pièce à la hauteur finale H2 du rotor complet.

Ainsi, via le logiciel précité présent dans l'unité de calcul (ordinateur) 38, lié au moyen de mesure 39 également précité (cf. figure 7), on va pouvoir déduire desdites mesures et des tolérances admissibles, les angles respectifs précités A de pose des pièces les unes par rapport les autres, autour de l'axe X1, afin que l'empilement soit donc réalisé dans la tolérance de la ligne d'arbre, et ceci de façon anticipée, avant même de disposer la première pièce.

Or, des erreurs de mesures peuvent être induites par un état de surface sale (graisse sur les surfaces de pièces) et par des erreurs de lectures, ayant été remarqué que lorsqu'on dépasse une certaine tolérance dans les mesures, la variabilité, donc l'imprécision, de chaque mesure est plus importante. Aussi a t-il été décidé de calibrer le moyen de mesure spécifiquement, par anticipation.

Ainsi, a-t-on prévu de fonctionner de préférence comme suit :

- on nettoie avec un dégraissant (par exemple de l'isopropanol) chaque surface de pièces à mesurer, telles que les surfaces centrales d'appui supérieures et inférieures 401,402 de la pièce 41 (figure 7) auxquelles pourraient correspondre, si la pièce 27 était sous mesures, aux surfaces d'appui 270a,270b (figure 2), et
- on effectue les mesures en concentricité et planéité à l'endroit de ces surfaces, ainsi que la détermination dudit angle A où se situe un dit défaut de concentricité et/ou de planéité :

-- après avoir préalablement réalisé et entré en mémoire de l'ordinateur 38 qui échange avec le moyen de mesure 39, plusieurs mesures au moins de concentricité, de planéité et dudit angle A, ces mesures étant conduites sur d'autres rotors de compresseur haute pression du même type (que celui 23 donc),
-- et en avoir déduit les tolérances admissibles à prendre en compte.

Cette opération préalable d'optimisation de la qualité des mesures combine donc un nettoyage par dégraissant et une démarche préalable de vérification de la répétabilité de l'instrumentation de mesure, ceci typiquement dans une situation d'assemblage de pièces usagées. Hors cas de modification de l'instrumentation (déplacement, changement de palpeur...), ceci ne devrait être réalisée qu'une fois lors de l'industrialisation de l'opération de montage.

En effectuant l'opération de répétabilité sur la mesure dudit « défaut » (concentricité et/ou planéité), y compris en valeur d'angle (A), sur plusieurs pièces (par exemple au moins trois pièces -donc issues de trois rotors différents- mesurées trois fois par au moins deux opérateurs différents. Mise en œuvre, cette méthode statistique a conduit à calculer la valeur moyenne de référence à partir de celles se trouvant groupées dans un champ réduit de résultats : zones B1 et B2 figure 10, où on peut trouver en ordonnée la mesure moyenne du défaut mesuré, en abscisse la qualité de réglages. Les zones B1, B2 définissent les résultats à retenir pour définir ladite valeur de qualité de réglage, là où il y a stabilité de mesure de l'instrument est la meilleure. La précision de réglage retenue va permettre de ne pas avoir d'écart dans les mesures du dit défaut. Ce test a permis de mettre en avant la précision de réglage du moyen de mesure par rapport aux autres paramètres (opérateurs, positionnement du palpeur, alignement du Top de la pièce). Ce test a permis de mettre en avant la précision de réglage du moyen de mesure par rapport aux autres paramètres.

Outre la valeur du défaut avec tolérance fournie par le système GENSPECT, sera favorablement fournie la valeur prédictive A1 de l'angle A précité, permettant de situer où se trouve le défaut sur le rotor.

Ainsi a-t-on prévu qu'à partir des caractérisations précitées desdites pièces du rotor 23, des déterminations des angles A où se situent lesdits défauts de planéité et/ou de concentricité, et de la prise en compte des tolérances admissibles des mesures fournies par les palpeurs, puissent, comme déjà mentionné et avant empilement desdites pièces, être prédits l'angle A1 précité de pose de chaque pièce et les valeurs desdits défauts après la pose de chaque pièce.

A cet égard, outre ce qui précède, le système GENSPECT peut aussi fournir outre une donnée « d'empilement optimisé » qui correspond à un calcul des angles de pose de chaque pièce les unes sur les autres afin de demeurer dans la tolérance de la ligne d'arbre, tout en évitant ledit effet de vilebrequin. Le logiciel calcule ces angles à partir du défaut précité des pièces défini à l'étape précédente. Il prédit alors également ledit angle A1 et la valeur du défaut après la pose de chaque pièce, jusqu'à la valeur finale, sur le rotor complet.

Et c'est donc en suivant ces données que les pièces 25-11a pourront alors être donc empilées les unes sur les autres, l'opérateur marquant chaque pièce à l'angle A1 prédit, cette marque lui servant de repère pour l'empilage, toutes les marques étant à aligner (repères X figure 8).

Comme déjà mentionné, chaque pose de pièce impose préalablement de les chauffer ou les refroidir, suivant la nature de la liaison entre les pièces. Une liaison où un diamètre mâle vient s'insérer dans un diamètre femelle implique le refroidissement de la pièce mâle. Une liaison où un diamètre femelle vient s'insérer autour d'un diamètre mâle implique la chauffe du diamètre femelle. Le retour à température ambiante, et donc au diamètre initial, crée un serrage naturel entre les deux diamètres. Un serrage axial à l'aide de boulons et écrous, tels ceux 43a,43b (figure 3), est malgré tout nécessaire.

Suite aux données fournies par le système GENSPECT, l'opérateur va en fait marquer sur les pièces plusieurs positions angulaires (voir figure 9) :

- SP : Le lieu angulaire de l'angle A où se situe le défaut de la pièce concernée,
- 0° : L'angle de référence de la pièce,
- X : Le repère de l'angle de pose de la pièce, dès lors qu'on empile chaque pièce en alignant les X les uns sur les autres. A cela peut donc s'ajouter un marquage « SPB » (non illustré) qui sert à repérer l'angle du SP d'un sous-ensemble.

Quand l'empilage des pièces se passe bien, ces marquages ne posent pas de problèmes car il suffit d'aligner les X.

Toutefois le cas suivant peut se présenter, dans lequel, le disque d'étanchéité 25 est déjà posé contre le premier tambour 27.

Dans ce cas, il a été prévu :

- si, sur certaines au moins desdites pièces restant à poser, il existe entre les angles A de pose déduites des mesures (palpeurs) et des tolérances admissibles, et les angles de pose A1 prédits, une différence supérieure ou égale à au moins 30° (on pourrait tolérer supérieure à 45°) pour la pose du disque d'étanchéité,

- et si la différence entre les valeurs mesurées desdits défauts et celles prédites est inférieure ou égale à une valeur comprise entre 0,01 et 0,05mm (par exemple 0,03/0,04mm mm), de refaire alors, de préférence, une étape de prédiction, sans dépose du disque d'étanchéité 25, les relevés (par palpeurs 39a..) prévus d'angle de pose de chaque pièce restante et des valeurs desdits défauts $\underline{A}$ après la pose de chaque pièce restante étant alors réalisés avec lesdites pièces restantes, dont un sous-ensemble formé par le disque d'étanchéité 25 posé avec le premier tambour 27.

Si par contre la différence entre les valeurs mesurées desdits défauts et celles prédites est supérieure ou égale à une valeur comprise entre 0,01 et 0,05mm, il sera préféré déposer les pièces déjà empilées et redébuter l'empilement.

Autre cas particulier qui a été spécifiquement traité, celui dans lequel :

- avant la pose du disque 33, qui s'effectue axialement autour de ladite partie amont 11a de l'arbre haute pression, on va contrôler que les poses déjà réalisées desdites pièces empilées l'ont été dans la tolérance de la ligne d'arbre,
- et, lors de ladite pose de ce disque 33, on chauffera ledit disque 33 entre 100°C et 140°C.

Ainsi, on sécurisera la qualité de pose et limitera le risque de dépose, donc d'endommagement de la pièce. On notera encore, qu'au-delà de ce qui précède en liaison avec les figures, lesdits premier et second tambours de rotor pourront chacun se limiter à un seul disque de rotor, les tambours et le disque primaire de ce rotor n'être pas monoblocs, et/ou ce dernier et le disque d'étanchéité présenter chacun un diamètre extérieur non nécessairement au moins trois fois plus grand que leur épaisseur maximum, même si les problèmes précités sont d'autant présents quant tel est le cas, avec présence des tambours et des structures monoblocs.

Ainsi, par exemple, la partie amont 11a de l'arbre 11 peut comprendre une configuration dans laquelle un disque est lié solidairement à la partie amont 11a, sans que le disque soit à aubes monobloc.

**Revendications**

1.  Procédé de réalisation d'un rotor de compresseur de turbomachine à gaz pour aéronef, présentant un axe de rotation et comprenant, comme pièces posées axialement en pile:

    - un disque d'étanchéité (25), pour l'étanchéité entre ledit rotor du compresseur et une chambre de combustion, le disque (25) d'étanchéité présentant des brides de fixation,
    - au moins un premier disque de rotor (27,270), à assembler au disque (25) d'étanchéité par les brides de fixation,
    - un disque intermédiaire (29) comportant un étage d'aubes intermédiaires,
    - au moins un second disque de rotor (31,310) définissant, avec ledit au moins un premier disque de rotor (27,270) et le disque intermédiaire (29), des étages d'aubes du rotor,
    - une partie amont (11a) d'un arbre (11) de liaison entre ledit rotor du compresseur et une turbine, et
    - un disque primaire (33) définissant le premier des étages d'aubes du rotor, le procédé, dans lequel, lors de la pose desdites pièces, on les empile les unes sur les autres puis on les assemble entre elles, étant **caractérisé en ce que** :

        - lors de la pose du disque d'étanchéité sur ledit au moins un premier disque de rotor (27,270) et/ou du disque intermédiaire (29) sur cedit au moins un premier disque de rotor assemblé avec le disque d'étanchéité, on applique un tassement axial (X1) avec une pression comprise entre $40 \times 10^5$ et $60 \times 10^5$ Pa,
        - avant assemblage du disque d'étanchéité (25) avec ledit au moins un premier disque de rotor (27,270), on chauffe le disque d'étanchéité entre 80°C et 140°C,
        - lors de la pose du disque intermédiaire sur ledit au moins un premier disque de rotor (27,270) assemblé avec le disque d'étanchéité, on chauffe le disque intermédiaire (29) entre 120°C et 160°C, puis on applique un tassement axial avec une pression comprise entre $40 \times 10^5$ et $60 \times 10^5$ Pa,
        - lors de la pose dudit au moins un second disque de rotor (31,310) sur le disque intermédiaire assemblé avec ledit au moins un premier disque de rotor (27,270), lui-même assemblé avec le disque d'étanchéité :

            -- a) on applique un tassement axial (X1) avec une pression comprise entre $40 \times 10^5$ et $60 \times 10^5$ Pa,
            -- b) on refroidit ledit au moins un second disque de rotor (31,310) :

                --- b1) entre -70°C et -110°C, ou
                --- b2) en fonction de diamètres extérieurs maximum du disque intermédiaire (29) et dudit au moins un second disque de rotor (31,310),

-- c) on ne chauffe pas de nouveau le disque intermédiaire, sauf si lors de l'étape b), la température de refroidissement dudit au moins un second disque de rotor (31,310) a été inférieure à -130°C, à 10°C près.

2. Procédé selon la revendication 1, dans lequel :

- ledit au moins un premier disque de rotor (27,270) se présente comme une succession de disques de rotor consécutifs définissant un premier tambour (27) du rotor,
- ledit au moins un second disque de rotor (31,310) se présente comme une succession de disques de rotor consécutifs définissant un second tambour (31) du rotor.

3. Procédé selon la revendication 1 ou 2, dans lequel, lors de l'étape b2), on refroidit ledit au moins un second disque de rotor (31,310) en fonction des diamètres extérieurs maximum du disque intermédiaire (29) et dudit au moins un second disque de rotor (31,310) du rotor, selon alors la formule : $T = [-(\varnothing D3 - \varnothing D2 + jeu) / (\alpha * \varnothing D3) + Tambiante]$, avec :

T = Température de refroidissement en °C
$\varnothing D3$ = diamètre extérieur maximum dudit au moins un second disque de rotor (31,310), en mm,
$\varnothing D2$ = diamètre extérieur maximum du disque intermédiaire (29), en mm,
jeu = constante prédéfinie comprise entre 0,10mm et 0,30mm,
$\alpha$ = coefficient de dilatation du matériau dudit au moins un second disque de rotor (31,310), en °C$^{-1}$,
Tambiante = Température de l'environnement de travail en °C.

4. Procédé selon l'une des revendications précédentes, dans lequel :

- avant empilement de l'ensemble des pièces, il comprend des étapes dans lesquelles, en tant que pièces du rotor, le disque d'étanchéité (25), lesdits au moins un premier et un second disques de rotor (27,270 ;31,310) et le disque intermédiaire (29) sont caractérisés :

-- par des mesures en concentricité et planéité, de façon à définir de possibles défauts :

--- de planéité et/ou de concentricité (SP), en extrémité de rotor, et/ou
--- de ligne d'arbre, le défaut de ligne d'arbre étant défini en combinant les valeurs de planéité et de concentricité desdites pièces posées assemblées,

-- par une détermination de l'angle (A), autour dudit axe de rotation, où se situe un dit défaut de planéité et/ou de concentricité,
-- et par une prise en compte des tolérances admissibles desdites mesures,

de sorte qu'on déduit desdites mesures et des tolérances admissibles, des angles de pose desdites pièces les unes par rapport les autres autour dudit axe de rotation (X1), afin que l'empilement soit réalisé dans la tolérance de la ligne d'arbre,
- et on empile ensuite lesdites pièces, en respectant lesdits angles de pose.

5. Procédé selon la revendication 4, dans lequel les caractérisations desdites pièces avec définition des tolérances admissibles, comprennent des sous-étapes où :

- on nettoie une surface à mesurer avec un dégraissant, et
- on effectue les mesures en concentricité et planéité, ainsi que la détermination dudit angle (A) où se situe un dit défaut de concentricité et/ou de planéité :

-- après avoir préalablement réalisé et entré en mémoire d'un ordinateur, par l'intermédiaire duquel les mesures sont effectuées, plusieurs mesures au moins de concentricité, de planéité et dudit angle où se situe un dit défaut, ces mesures étant conduites sur d'autres rotors de compresseur haute pression du même type,
-- et en avoir déduit les tolérances admissibles à prendre en compte.

6. Procédé selon l'une des revendications précédentes, dans lequel l'étape de chauffage du disque d'étanchéité entre 80°C et 140°C comprend :

- un chauffage au moins des brides (25a) de fixation dudit disque d'étanchéité (25) entre 100°C et 120°C, ou
- un chauffage de plusieurs endroits (25a,25b) dudit disque d'étanchéité, ou
- un chauffage dudit disque d'étanchéité par l'intermédiaire d'un four (34).

7. Procédé selon la revendication 4 seule ou la revendication 4 en combinaison avec l'une des revendications 5 ,6, dans lequel, à partir des caractérisations desdites pièces du rotor (23) du compresseur, des déterminations des angles (A) où se situe lesdits défauts de planéité et/ou de concentricité, et la prise en compte des tolérances admissibles desdites mesures, sont prédits, avant empilement desdites pièces, l'angle (A1) de pose de chaque dite pièce et les valeurs desdits défauts après la pose de chaque dite pièce.

8. Procédé selon la revendication 7, dans lequel, le disque d'étanchéité (25) étant déjà posé contre ledit au moins un premier disque de rotor (27,270),

- si, entre les angles de pose de certaines au moins desdites pièces restant à poser déduites des mesures et des tolérances admissibles, et les angles de pose prédits, il existe une différence supérieure ou égale à au moins 30° pour la pose du disque d'étanchéité, et si la différence entre les valeurs mesurées desdits défauts (SP) et celles prédites est inférieure ou égale à une valeur comprise entre 0,01 et 0,05mm, une étape de prédiction est refaite, sans dépose du disque d'étanchéité, des mesures d'angle de pose de chaque pièce restante et les valeurs desdits défauts après la pose de chaque pièce restante étant alors réalisées avec lesdites pièces restantes, dont un sous-ensemble formé par le disque d'étanchéité (25) posé avec ledit au moins un premier disque de rotor (27,270),
- et si la différence entre les valeurs mesurées desdits défauts et celles prédites est supérieure ou égale à une valeur comprise entre 0,01 et 0,05mm, les pièces déjà empilées sont déposées et l'empilement est recommencé.

9. Procédé selon l'une des revendications précédentes, dans lequel, lors de la pose du disque intermédiaire sur ledit au moins un premier disque de rotor (27,270) assemblé avec le disque d'étanchéité, le chauffage du disque intermédiaire (29) est réalisé dans un four (34) et/ou en plusieurs endroits (29a,29b) du disque intermédiaire situés à l'écart des brides (29a) de fixation du disque intermédiaire.

10. Procédé selon l'une des revendications précédentes, dans lequel, lors de la pose de ladite partie amont (11a) dudit arbre, on la chauffe entre 120°C et 140°C et, après un assemblage serré entre ladite partie amont de l'arbre (11) et l'empilement assemblé déjà réalisé, on réalise un relevé de cote sur une extrémité supérieure (110) de ladite partie amont de l'arbre (11).

11. Procédé selon la revendication 2 seule ou la revendication 2 en combinaison avec l'une des revendications 3 à 8, dans lequel :

- avant la pose du disque primaire (33), qui s'effectue axialement autour de ladite partie amont (11a) de l'arbre haute pression, on contrôle que les poses déjà réalisées desdites pièces empilées l'ont été dans la tolérance de la ligne d'arbre,
- et, lors de ladite pose du disque primaire (33), on chauffe le disque primaire (33) entre 100°C et 140°C.

**Patentansprüche**

1. Verfahren zur Herstellung eines Verdichterrotors eines Gasturbinentriebwerks für Luftfahrzeuge, enthaltend eine Drehachse und als axial gestapelte Teile:

- eine Dichtungsscheibe (25) zur Abdichtung zwischen dem Verdichterrotor und einer Brennkammer, wobei die Dichtungsscheibe (25) Befestigungsflansche aufweist,
- zumindest eine erste Rotorscheibe (27, 270), die über die Befestigungsflansche mit der Dichtungsscheibe (25) zusammenzufügen ist,
- eine Zwischenscheibe (29) mit einer Stufe aus Zwischenschaufeln,
- zumindest eine zweite Rotorscheibe (31, 310), die zusammen mit der zumindest einen ersten Rotorscheibe (27, 270) und der Zwischenscheibe (29) Rotorschaufelstufen definiert,
- einem stromaufwärts gelegenen Teil (11a) einer Verbindungswelle (11) zwischen dem Verdichterrotor und einer Turbine, und

- eine Primärscheibe (33), die die erste der Rotorschaufelstufen definiert, wobei das Verfahren, bei dem die genannten Teile beim Einsetzen übereinander gestapelt und dann zusammengefügt werden, **dadurch gekennzeichnet ist, dass**

- beim Einsetzen der Dichtungsscheibe auf die zumindest eine erste Rotorscheibe (27, 270) und/oder der Zwischenscheibe (29) auf diese zumindest eine erste, mit der Dichtungsscheibe zusammengefügte Rotorscheibe eine axiale Stauchung (X1) mit einem Druck zwischen 40 x $10^5$ und 60 x $10^5$ Pa erfolgt,

- vor dem Zusammenfügen der Dichtungsscheibe (25) mit der zumindest einen ersten Rotorscheibe (27, 270) die Dichtungsscheibe auf 80°C bis 140°C erhitzt wird,

- beim Einsetzen der Zwischenscheibe auf die zumindest eine erste mit der Dichtungsscheibe zusammengefügte Rotorscheibe (27, 270) die Zwischenscheibe (29) auf 120°C bis 160°C erhitzt wird und anschließend eine axiale Stauchung mit einem Druck zwischen 40 x $10^5$ und 60 x $10^5$ Pa erfolgt,

- beim Einsetzen der zumindest einen zweiten Rotorscheibe (31, 310) auf die Zwischenscheibe, die mit der zumindest einen ersten Rotorscheibe (27, 270) zusammengefügt ist, die wiederum mit der Dichtungsscheibe zusammengefügt ist,

-- a) eine axiale Stauchung (X1) mit einem Druck zwischen 40 x $10^5$ und 60 x $10^5$ Pa erfolgt,
-- b) die zumindest eine zweite Rotorscheibe (31, 310) abgekühlt wird auf

--- b1) zwischen -70 °C und -110 °C, oder
--- b2) in Abhängigkeit von den maximalen Außendurchmessern der Zwischenscheibe (29) und der zumindest einen zweiten Rotorscheibe (31, 310),

-- c) die Zwischenscheibe nicht erneut erhitzt wird, es sei denn, in Schritt b) lag die Kühltemperatur der zumindest einen zweiten Rotorscheibe (31, 310) unter -130 °C, bis auf 10°C genau.

2. Verfahren nach Anspruch 1, wobei

- die zumindest eine erste Rotorscheibe (27, 270) in Form einer Folge von aufeinanderfolgenden Rotorscheiben vorliegt, die eine erste Rotortrommel (27) definieren,
- die zumindest eine zweite Rotorscheibe (31, 310) in Form einer Folge von aufeinanderfolgenden Rotorscheiben vorliegt, die eine zweite Rotortrommel (31) definieren.

3. Verfahren nach Anspruch 1 oder 2, wobei
in Schritt b2) die zumindest eine zweite Rotorscheibe (31, 310) in Abhängigkeit von den maximalen Außendurchmessern der Zwischenscheibe (29) und der zumindest einen zweiten Rotorscheibe (31, 310) des Rotors gekühlt wird gemäß der Formel:

$$T = [- (\varnothing D3 - \varnothing D2 + Spiel) / (\alpha * \varnothing D3 + TUmgebung],$$

mit:

T = Kühltemperatur in °C
$\varnothing D3$ = maximaler Außendurchmesser der zumindest einen zweiten Rotorscheibe (31, 310), in mm,
$\varnothing D2$ = maximaler Außendurchmesser der Zwischenscheibe (29), in mm,
Spiel = vorbestimmte Konstante zwischen 0,10 mm und 0,30 mm,
$\alpha$ = Ausdehnungskoeffizient des Materials der zumindest einen zweiten Rotorscheibe (31, 310), in °C$^{-1}$,
TUmgebung = Temperatur der Arbeitsumgebung in °C.

4. Verfahren nach einem der vorangehenden Ansprüche, wobei:

- es vor dem Stapeln der Anordnung von Teilen Schritte umfasst, bei denen als Rotorteile die Dichtungsscheibe (25), die zumindest eine erste und eine zweite Rotorscheibe (27, 270; 31, 310) und die Zwischenscheibe (29) charakterisiert werden

-- durch Messung der Konzentrizität und Ebenheit, um mögliche Fehler

--- der Ebenheit und/oder Konzentrizität (SP) am Rotorende und/oder

--- des Wellenstrangs zu definieren, wobei der Wellenstrangfehler durch die Kombination der Werte der Ebenheit und der Konzentrizität der zusammengefügten, eingesetzten Teile definiert ist,

-- durch Bestimmung des Winkels (A) um die Drehachse, wo sich der genannte Fehler der Ebenheit und/oder Konzentrizität befindet,

-- und durch Berücksichtigung der zulässigen Toleranzen der genannten Messungen,

so dass aus diesen Messungen und zulässigen Toleranzen Anstellwinkel für die Teile zueinander um die Drehachse (X1) herum abgeleitet werden, so dass da Stapeln innerhalb der Toleranz des Wellenstrangs erfolgt,

- und dann die genannten Teile unter Beachtung der genannten Anstellwinkel gestapelt werden.

5. Verfahren nach Anspruch 4, wobei die Charakterisierungen der Teile mit Definition der zulässigen Toleranzen die Unterschritte umfassen, wonach

- eine zu messende Oberfläche mit einem Entfettungsmittel gereinigt wird, und

- Messungen der Konzentrizität und Ebenheit sowie die Bestimmung des Winkels (A), in dem sich ein solcher Konzentrizitäts- und Ebenheitsfehler befindet, erfolgen

-- nachdem zuvor zumindest mehrere Messungen der Konzentrizität, der Ebenheit und des Winkels, in dem sich der Fehler befindet, durchgeführt und in den Speicher eines Computers eingegeben wurden, mit dem die Messungen durchgeführt werden, wobei diese Messungen an anderen Hochdruckverdichterrotoren desselben Typs durchgeführt werden,

-- und davon die zulässigen Toleranzen, die zu berücksichtigen sind, abgezogen wurden.

6. Verfahren nach einem der vorangehenden Ansprüche, wobei der Schritt des Erhitzens der Dichtungsscheibe auf 80 °C bis 140 °C umfasst:

- ein Erhitzen zumindest der Befestigungsflansche (25a) zum Befestigen der Dichtungsscheibe (25) auf 100 °C bis 120 °C, oder

- ein Erhitzen mehrerer Stellen (25a, 25b) der Dichtungsscheibe, oder

- ein Erhitzen der Dichtungsscheibe mittels eines Ofens (34).

7. Verfahren nach Anspruch 4 für sich genommen oder nach Anspruch 4 in Kombination mit einem der Ansprüche 5, 6, wobei ausgehend von den Charakterisierungen der Teile des Verdichterrotors (23), den Bestimmungen Ermittlungen der Winkel (A), wo sich die Ebenheits- und/oder Konzentrizitätsfehler befinden, und unter Berücksichtigung der zulässigen Toleranzen der genannten Messungen vor dem Stapeln der genannten Teile der Anstellwinkel (A1) jedes der genannten Teile und die Werte der genannten Fehler nach dem Einsetzen jedes der genannten Teile vorhergesagt werden.

8. Verfahren nach Anspruch 7, wobei bei bereits an der zumindest einen ersten Rotorscheibe (27, 270) eingesetzter Dichtungsscheibe (25) dann,

- wenn zwischen den Anstellwinkeln zumindest einiger der noch einzusetzenden Teile, die von den Messungen und den zulässigen Toleranzen abgeleitet wurden, und den vorhergesagten Anstellwinkeln eine Differenz größer oder gleich mindestens 30° für das Einsetzen der Dichtungsscheibe besteht, und wenn die Differenz zwischen den gemessenen und den vorhergesagten Werten der genannten Fehler (SP) kleiner oder gleich einem Wert zwischen 0,01 und 0,05 mm ist, ein Vorhersageschritt wiederholt wird, ohne die Dichtungsscheibe zu entfernen, wobei Messungen des Anstellwinkels jedes verbleibenden Teils und der Werte der genannten Fehler nach dem Einsetzen jedes verbleibenden Teils dann mit den genannten verbleibenden Teilen durchgeführt werden, einschließlich einer Unterbaugruppe, die aus der eingesetzten Dichtungsscheibe (25) mit der zumindest einen ersten Rotorscheibe (27, 270) gebildet ist,

- und wenn die Differenz zwischen den gemessenen und den vorhergesagten Werten der genannten Fehler größer oder gleich einem Wert zwischen 0,01 und 0,05 mm ist, die bereits gestapelten Teile entfernt werden und die Stapelung erneut begonnen wird.

9. Verfahren nach einem der vorangehenden Ansprüche,

wobei beim Einsetzen der Zwischenscheibe auf die zumindest eine erste mit der Dichtscheibe zusammengefügte Rotorscheibe (27, 270) das Erhitzen der Zwischenscheibe (29) in einem Ofen (34) und/oder an mehreren Stellen (29a, 29b) der Zwischenscheibe erfolgt, die von den Befestigungsflanschen (29a) zum Befestigen der Zwischenscheibe entfernt liegen.

10. Verfahren nach einem der vorangehenden Ansprüche,
    wobei beim Einsetzen des stromaufwärts gelegenen Teils (11a) der Welle dieser auf 120°C bis 140°C erhitzt wird und nach einem festen Zusammenfügen zwischen dem stromaufwärts gelegenen Teil der Welle (11) und der bereits hergestellten, zusammengefügten Stapelung an einem oberen Ende (11) des stromaufwärts gelegenen Teils der Welle (11) eine Maßerfassung vorgenommen wird.

11. Verfahren nach Anspruch 2 für sich genommen oder nach Anspruch 2 in Kombination mit einem der Ansprüche 3 bis 8,
    wobei

    - vor dem Einsetzen der Primärscheibe (33), das axial um den genannten stromaufwärts gelegenen Teil (11a) der Hochdruckwelle erfolgt, überprüft wird, dass die bereits erfolgten Montagen der gestapelten Teile innerhalb der Toleranz des Wellenstrangs erfolgt sind,
    - und beim Einsetzen der Primärscheibe (33) die Primärscheibe (33) auf 100°C bis 140°C erhitzt wird.

**Claims**

1. A method for manufacturing a compressor rotor of an aircraft gas turbine engine having an axis of rotation and comprising the parts as follows, axially installed in a stack:

   - a sealing disk (25), for the seal between said compressor rotor and a combustion chamber, the sealing disk (25) having mounting flanges,
   - at least one first rotor disk (27, 270), to be assembled with the sealing disk (25) using the mounting flanges,
   - an intermediate disk (29) comprising a stage of intermediate blades,
   - at least one second rotor disk (31, 310) defining rotor blade stages with said at least one first rotor disk (27, 270) and the intermediate disk (29),
   - an upstream portion (11a) of a shaft (11) for a connection between said compressor rotor and a turbine, and
   - a primary disk (33) defining a first one of the rotor blade stages,

   wherein, when installing said parts, said parts are stacked one on top of another and then assembled together, said method being **characterised in that**:

   - when installing the sealing disk on said at least one first rotor disk (27, 270) and/or the intermediate disk (29) on said at least one first rotor disk assembled with the sealing disk, an axial packing (X1) is applied with a pressure ranging from 40 x $10^5$ to 60 x $10^5$ Pa,
   - prior to assembling the sealing disk (25) with said at least one first rotor disk (27, 270), the sealing disk is heated to a temperature ranging from 80 °C to 140 °C,
   - when installing the intermediate disk on said at least one first rotor disk (27, 270) assembled with the sealing disk, the intermediate disk (29) is heated to a temperature ranging from 120 °C to 160 °C, and then an axial packing is applied with a pressure ranging from 40 x $10^5$ to 60 x $10^5$ Pa,
   - when installing said at least one second rotor disk (31, 310) on the intermediate disk assembled with the at least one first rotor disk (27, 270), itself assembled with the sealing disk:

     -- a) an axial packing (X1) is applied with a pressure ranging from 40 x $10^5$ to 60 x $10^5$ Pa,
     -- b) said at least one second rotor disk (31, 310) is cooled down:

       --- b1) either to a temperature ranging from -70 °C to -110 °C,
       --- b2) or as a function of maximum outer diameters of the intermediate disk (29) and of said at least one second rotor disk (31, 310),

     -- c) the intermediate disk is not heated again unless, during step b), the cooling temperature of said at least one second rotor disk (31, 310) was less than -130 °C, to within 10 °C.

2. The method according to claim 1, wherein:

   - said at least one first rotor disk (27, 270) takes the form of a succession of consecutive rotor disks defining a first rotor drum (27),
   - said at least one second rotor disk (31, 310) takes the form of a succession of consecutive rotor disks defining a second rotor drum (31).

3. The method according to claim 1 or claim 2, wherein, during step b2), said at least one second rotor disk (31, 310) is cooled down according to the maximum outer diameters of the intermediate disk (29) and of said at least one second rotor disk (31, 310), according to the following formula: $T = [- (\varnothing D3 - \varnothing D2 + clearance) / (\alpha * \varnothing D3) + Tambiant]$, where:

   T = cooling temperature in °C
   $\varnothing D3$ = maximum outer diameter of said at least one second rotor disk (31, 310), in mm,
   $\varnothing D2$ = maximum outer diameter of the intermediate disk (29), in mm,
   clearance = predefined constant ranging from 0.10 mm to 0.30 mm,
   $\alpha$ = expansion coefficient of the material of said at least one second rotor disk (31, 310), in $°C^{-1}$,
   Tambiant = temperature of a working environment in °C.

4. The method according to one of the preceding claims, wherein:

   - prior to stacking all of said parts, it includes steps in which, as parts of the rotor, the sealing disk (25), said at least one first and second rotor disks (27, 270; 31, 310) and the intermediate disk (29) are **characterized by** :

       -- performing concentricity and flatness measurements in order to define possible defects in terms of:

           --- concentricity (SP) and/or unevenness, at the rotor ends, and/or
           --- shaft line failure, such a shaft line failure being defined by combining the flatness and concentricity values of said parts installed as an assembly,

       -- determining an angle (A), around said axis of rotation, where such said unevenness or concentricity defect is located,
       -- and accounting for admissible tolerances of said measurements,
       so that installation angles of said parts one in relation to another around said axis of rotation (X1) are deduced from said concentricity and flatness measurements and from admissible tolerances, in order for the stack to be executed within a shaft line tolerance,

   - and then, said parts are stacked, while observing said installation angles.

5. The method according to claim 4, wherein the characterizations of said parts with said admissible tolerances include sub-steps in which:

   - a surface to be measured is cleaned with a degreasing agent, and
   - the concentricity and flatness measurements are performed and said angle (A) where one of said concentricity and/or unevenness defect is located is determined:

       -- after having previously performed and entered into a memory of a computer used to perform the measurements, several measurements at least of concentricity, flatness and of said angle (A) where one said defect is located, such measurements being performed on other high-pressure compressor rotors of the same type, and,
       -- having deducted from said several measurements the admissible tolerances to be considered.

6. The method according to one of the preceding claims, wherein step in which the sealing disk is heated to a temperature ranging from 80 °C to 140 °C includes either of the following:

   - heating of at least the mounting flanges (25a) of said sealing disk to a temperature (25) ranging from 100 °C to 120 °C,
   - heating several locations of said sealing disk,

- heating said sealing disk using an oven (34).

7. The method according to claim 4 alone or claim 4 in combinaison with one of the claims 5, 6, wherein, based on said characterizations of said compressor rotor parts (23), on said determined angles (A) where said concentricity and/or unevenness defects are located, and on the consideration of the admissible tolerances of said measurements, the installation angle of each said part and the values of said concentricity and/or unevenness defects after installation of each said part are predicted prior to stacking said parts.

8. The method according to claim 7, wherein the sealing disk (25) having already been installed against said at least one first rotor disk (27, 270),

- if, between the installation angles of some at least of said parts remaining to be installed deducted from the measurements and the admissible tolerances, and the predicted installation angles, there is a difference greater than or equal to at least 30° for the installation of the sealing disk, and if the difference between the measured values of said concentricity and/or unevenness defects (SP) and the predicted values is less than or equal to a value ranging from 0.01mm to 0.05 mm, a prediction step is repeated, without removing the sealing disk, for the installation angle measurements of each remaining part and the values of said defects after installing each remaining part being then carried out with said remaining parts, among which a subassembly consisting of the installed sealing disk (25) with said at least one first rotor disk (27, 270),
- and if the difference between the measured values of said defects and the predicted values is greater than or equal to a value ranging from 0.01mm to 0.05 mm, the parts that have already been installed are removed and stacking is started over.

9. The method according to one of the preceding claims, wherein, when installing the intermediate disk on said at least one first rotor disk (27, 270) assembled with the sealing disk, heating of the intermediate disk (29) is performed in an oven (34) and/or in several locations (29a, 29b) on the intermediate disk located away from the mounting flanges (29a) of the intermediate disk.

10. The method according to one of the preceding claims, wherein, when installing said upstream portion (11a) of the connecting shaft, said upstream portion is heated to a temperature ranging from 120 °C to 140 °C and, after a clamped assembly between said upstream portion of the connecting shaft (11) and the assembled stack already made, a reading of the dimensions is performed at an upper end (110) of said upstream portion of the connecting shaft (11).

11. The method according to claim 2 alone or claim 2 in combinaison with one of claims 3 to 8, wherein:

- prior to installing the primary disk (33), which is done axially around said upstream portion (11a) of the connecting shaft, the installations of said stacked parts already carried out are checked to ensure that they have been done within the tolerance of the shaft line,
- and, during said installation of the primary disk (33), the primary disk (33) is heated to a temperature ranging from 100 °C to 140 °C.

**Fig. 1**

Fig. 2

Caractérisation
des pièces

Optimisation
d'emplacement

Vérification
finale

**Fig. 3**

**Fig. 4**

**Fig. 5**

**Fig. 6**

**Fig. 7**

**Fig. 8**

**Fig. 9**

MOYENNES DES MESURES

| Opérateur | Alignement o° | Affinage inclinaison | Palpeur 1 |
|---|---|---|---|
| | | | |
| | | B1 | |

| Affinage centrage | Palpeur 2 | Palpeur 3 | Palpeur 4 |
|---|---|---|---|
| | | | |
| B2 | | | |

**Fig. 10**

**RÉFÉRENCES CITÉES DANS LA DESCRIPTION**

**Documents brevets cités dans la description**

- EP 1591623 A2